# EUROPÄISCHE PATENTSCHRIFT

(11) **EP 2 122 191 B1**
(45) Veröffentlichungstag und Bekanntmachung des Hinweises auf die Patenterteilung: **09.03.2011**
(21) Anmeldenummer: 08701284.5
(22) Anmeldetag: 08.01.2008
(51) Int. Cl.: F16D 13/75

(54) **AUSRÜCKANORDNUNG FÜR EINE KUPPLUNG MIT VERSCHLEISSNACHSTELLUNG**
DISENGAGEMENT ARRANGEMENT FOR A CLUTCH WITH WEAR ADJUSTER
SYSTEME DE DEBRAYAGE POUR UN EMBRAYAGE A RATTRAPAGE D'USURE

(30) Priorität: 21.02.2007 DE 102007008411
(43) Veröffentlichungstag der Anmeldung: 25.11.2009
(73) Patentinhaber: ZF Friedrichshafen AG, 88038 Friedrichshafen (DE)
(72) Erfinder: KARLHEINZ, Hoher, 88677 Markdorf (DE); ANDREAS, Acker, 88074 Meckenbeuren (DE)
(86) Internationale Anmeldenummer: PCT/EP2008/050108
(87) Internationale Veröffentlichungsnummer: WO 2008/101742

(56) Entgegenhaltungen:
- WO-A-03/029676
- DE-A1- 3 210 922
- GB-A- 1 544 814
- US-A- 2 040 034
- US-A- 3 433 341
- US-A- 4 057 134
- US-A- 4 086 996

## Beschreibung

Die vorliegende Erfindung betrifft eine Ausrückanordnung zum Betätigen zumindest einer Kupplung eines Fahrzeuggetriebes gemäß der im Oberbegriff des Patentänspruches 1 näher definierten Art.

Beispielsweise beschreibt die Druckschrift DE 10 2006 017 711.8 eine Kupplungsausrückanordnung für eine Reibungskupplung eines Fahrzeuggetriebes. Die zentrale Ausrückanordnung ist koaxial zu der Getriebeeingangswelle des Fahrzeuggetriebes angeordnet. Um die Reibungskupplung zu öffnen oder zu schließen, wird ein Ausrücklager der Ausrückanordnung axial bewegt. Dazu umfasst die Ausrückanordnung eine hydraulische Betätigungseinrichtung. Bei der hydraulischen Betätigungseinrichtung wird das Ausrücklager mittels eines Druckmediums betätigt. Dazu ist ein Betätigungskolben vorgesehen, der durch das Druckmedium axial bewegbar ist. Es werden aber auch andere, z. B. elektromechanische oder pneumatische Betätigungseinrichtungen zum Betätigen des Ausrücklagers bzw. der Kupplung verwendet.

Es ist bekannt, dass die Reibbeläge der Reibungskupplung aufgrund der üblicherweise zahlreichen Betätigungsvorgänge der Kupplung einem Verschleiβ unterliegen, der sich nachteilig auf die aufzubringenden Ausrückkräfte und den Arbeitsweg des Ausrücklagers auswirkt. Um diesen auftretenden Verschleiß auszugleichen, ist bei der beschriebenen Ausrückanordnung eine Ausgleichsvorrichtung vorgesehen. Mit der Ausgleichsvorrichtung wird ein infolge des Verschleißes der Reibungskupplung zu verändernder Hub des Betätigungskolbens ausgeglichen. Dies erfordert konstruktive Änderungen des Betätigungssystems, welches zusätzliche Kosten verursacht. Zudem kann diese Art des Ausgleiches des Verschleißes nicht bei anderen Betätigungsarten verwendet werden. Vielmehr sind bei z. B. elektromechanischen Betätigungseinrichtungen umfangreiche Mechanismen auch z. B. an der Kupplung erforderlich, um den Verschleißausgleich zu schaffen.

Eine Ausrückanordnung zum Betätigen einer Kupplung nach dem Oberbegriff des Patentanspruchs 1 ist z.B. aus US-A-4057134 bekannt.

Demnach liegt der vorliegenden Erfindung die Aufgabe zugrunde, eine Ausrückanordnung der eingangs beschriebenen Gattung vorzuschlagen, bei der auf möglichst einfache Art unabhängig von der Art der Betätigungseinrichtung ein Verschleiß- und ein Toleranzausgleich der Bauteile realisiert wird.

Diese Aufgabe wird erfindungsgemäß durch die Merkmale des Patentanspruches 1 gelöst. Weitere vorteilhafte Ausgestaltungen ergeben sich insbesondere aus den Unteransprüchen.

Somit wird eine Ausrückanordnung zum Betätigung zumindest einer Kupplung eines Fahrzeuggetriebes mit einem inneren Ausrückelement und mit einem Ausrücklagerhalter vorgeschlagen, welche koaxial zu einer Getriebeeingangswelle angeordnet sind, wobei das Ausrückelement über eine Betätigungseinrichtung axial bewegbar ist. Der Ausrücklagerhalter kann von dem Ausrückelement axial bewegt werden, um die Kupplung über ein mit dem Ausrücklagerhalter verbundenes Ausrücklager zu betätigen. Erfindungsgemäß wird bei der Ausrückanordnung zwischen dem Ausrückelement und dem Ausrücklagerhalter ein axialer Toleranzbereich zum Verschleiß und/oder Toleranzausgleich vorgesehen:

In besonders vorteilhafter Weise wird damit unabhängig von der Art der Betätigungseinrichtung und ohne konstruktive Veränderungen der Kupplung ein Toleranzbereich geschaffen, der die Betätigung der Kupplung durch das Ausrücklager sicherstellt und zusätzlich nach der Betätigung der Kupplung eine Anordnung des Ausrücklagerhalters und des Ausrücklagers selbst gewährleistet, die den durch Verschleiß und Bauteiltoleranzen veränderten Bewegungsbereich bei der erfindungsgemäßen Ausrückanordnung ausgleicht. Infolgedessen wird eine sichere Betriebsweise der Ausrückanordnung sichergestellt.

Die der erfindungsgemäßen Lösung zugrunde liegende Idee besteht somit im Wesentlichen darin, dass das Ausrückelement erst nach dem Überwinden des axialen Toleranzbereiches mit dem Ausrücklagerhalter zum Betätigen der Kupplung in Wirkverbindung gebracht wird.

Dies kann gemäß einer möglichen Ausgestaltung der Erfindung dadurch erreicht werden, dass das Ausrückelement und der Ausrücklagerhalter derart miteinander verspannt werden, dass die Betätigungskraft von der Betätigungseinrichtung über das Ausrückelement auf den Ausrücklagerhalter zum Öffnen der Kupplung übertragen werden kann. Nach der Betätigung der Kupplung wird der Ausrücklagerhalter mit dem verbundenen Ausrücklager in den axialen Toleranzbereich zurückgeführt, so dass der Ausrücklagerhalter und das Ausrückelement wieder voneinander gelöst werden. Infolgedessen ist der Ausrücklagerhalter nach dem Zurückfahren des Ausrückelements in seine Endlage axial frei beweglich, wodurch die Toleranzen der Bauteile und der Verschleiß der Kupplung ausgeglichen werden können.

Gemäß der Erfindung ist das Ausrückelement über mehrere Wälzkörper auf dem Ausrücklagerhalter axial bewegbar gelagert, um eine radiale Verspannung zwischen den beiden Bauteilen zu ermöglichen. Zum Realisieren des Toleranzbereiches kann jedem Wälzkörper ein Anschlagelement zugeordnet sein, um die Verspannung zwischen den Bauteilen wieder zu lösen. Somit wird der Toleranzbereich durch eine begrenzte Relativbewegung des Ausrückelements in Bezug auf den Ausrücklagerhalter ohne eine Übertragung einer Ausrückkraft realisiert.

Es sind auch andere mechanische Lösungen denkbar, beispielsweise Gewindeverbindungen oder dergleichen, welche ebenfalls eine Verspannung der Bauteile mit einem entsprechenden axialen Toleranzbereich ermöglichen.

Als Wälzkörper können beispielsweise Kugeln oder dergleichen verwendet werden. Vorzugsweise können mehrere über den Umfang des Ausrückelements verteilt angeordnete Kugeln als so genannter Kugelkranz oder dergleichen eingesetzt werden. Als Anschlagelement kann vorzugsweise jedem Wälzkörper ein gehäusefester Stift oder dergleichen zugeordnet sein, der die axiale Bewegung des zugeordneten Wälzkörpers in der der Kupplung abgewandten Richtung begrenzt. Auf diese Weise kann die Verspannung zwischen dem Ausrückelement und dem Ausrücklagerhalter gelöst werden, so dass eine freie axiale Bewegung des Ausrücklagerhalters zum Ausgleich der Toleranzen und des Verschleißes sichergestellt wird.

Das Anschlagelement kann an beliebiger Stelle befestigt werden. Beispielsweise bei einer elektromechanischen Betätigungseinrichtung kann der Stift in einem Gehäuseteil der Betätigungseinrichtung gehalten werden. Es sind auch andere Anordnungsmöglichkeiten denkbar.

Gemäß der Erfindung ist vorgesehen, dass das Ausrückelement einen Ringabschnitt zum Führen der Wälzkörper und einen Hülsenabschnitt aufweist. Der Hülsenabschnitt kann sich koaxial zur Getriebeeingangswelle erstrecken und mit der Betätigungseinrichtung in Wirkverbindung stehen. Um den radialen Freiraum der Wälzkörper zu verändern, kann gemäß einer möglichen Weiterbildung der Erfindung vorgesehen sein, dass sich der Innendurchmesser des Ringabschnittes des Ausrückelements in axialer Richtung verändert.

Zur Betätigung einer so genannten gedrückten Kupplung kann sich der Innendurchmesser in Richtung der Kupplung vergrößern. Beispielsweise bei der Betätigung von gezogenen Kupplungen könnte der Innendurchmesser in abgewandter Richtung der Kupplung vergrößert werden. Möglicherweise sind weitere Modifikationen bei der erfindungsgemäßen Ausrückanordnung notwendig, um mit dieser Anordnung auch gezogene Kupplungen zu betätigen bzw. auszurücken.

Gemäß der Erfindung ist vorsehen, dass der Ausrücklagerhalter als Hülsenelement ausgebildet ist, an dessen kupplungsseitigem Ende ein Flanschkragen oder dergleichen angeformt ist. Auf diese Weise kann zwischen dem Ringabschnitt des Ausrückelements und dem zugeordneten Flanschkragen des Ausrücklagerhalters eine erste Feder zum Vorspannen des an dem Ausrücklagerhalter angeordneten Ausrücklagers angeordnet sein. Die Feder gewährleistet somit eine kontinuierliche Vorspannkraft auf das Ausrücklager. Erfindunsgsgemäß ist eine zweite Feder zwischen dem Flanschkragen und den Wälzkörpern zum Vorspannen der Wälzkörper angeordnet. Durch die zweite Feder kann eine gleichmäßige Anlage der Wälzkörper an dem Ausrückelement gewährleistet werden.

Um eine optimale Führung der Wälzkörper zu gewährleisten, kann gemäß einer nächsten Weiterbildung der Erfindung vorgesehen sein, dass in axialer Richtung an jeder Seite der Wälzkörper ein Ring- oder Scheibenelement angeordnet ist. Um die beiden Federn an der erfindungsgemäßen Ausrückanordnung optimal zu halten, kann bei einer nächsten Ausgestaltung vorgesehen sein, dass der Flanschkragen und der Ringabschnitt des Ausrückelements an den einander zugewandten Seiten jeweils ringförmige Ausnehmungen oder dergleichen zum Aufnehmen und Führen der Federn aufweist. Gemäß der Erfindung werden die beiden Federn koaxial zueinander angeordnet.

Die erfindungsgemäß vorgeschlagene Ausrückanordnung kann bei beliebigen Getriebearten zum Betätigen bzw. Ausrücken der jeweiligen Kupplungen eingesetzt werden. Die Art der Betätigungseinrichtung ist hierbei nicht beschränkt.

Nachfolgend wird die vorliegende Erfindung anhand der Zeichnungen näher erläutert.
Es zeigen:
- Fig. 1: eine geschnittene Teilansicht einer möglichen Ausfüh- rungsform einer erfindungsgemäßen Ausrückanordnung an einer Getriebeeingangswelle eines Fahrzeuggetriebes und
- Fig. 2: eine vergrößerte Ansicht eines Details A gemäß Fig. 1.

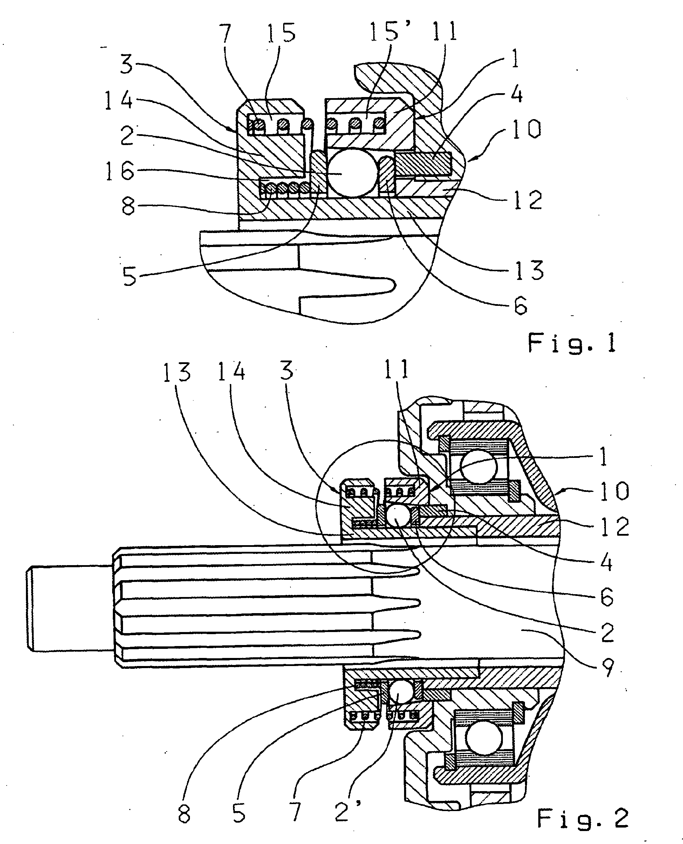

Die Fig. 1 und 2 zeigen eine mögliche Ausführungsform einer erfindungsgemäßen Ausrückanordnung zum Betätigen zumindest einer nicht weiter dargestellten Kupplung eines Fahrzeuggetriebes.

Die erfindungsgemäße Ausrückanordnung umfasst ein inneres Ausrückelement 1 und einen Ausrücklagerhalter 3, welche beide koaxial und axial bewegbar an einer Getriebeeingangswelle 9 angeordnet sind. Bei der hier dargestellten Ausführungsform der Ausrückanordnung ist eine teilweise dargestellte elektromechanische Betätigungseinrichtung 10 angedeutet, auf die nicht weiter eingegangen wird, da die erfindungsgemäße Ausrückanordnung unabhängig von der Betätigungseinrichtung 10 verwendbar ist. Ebenfalls ist das üblicherweise mit dem Ausrücklagerhalter 3 verbundene Ausrücklager zum Betätigen der Kupplung nicht weiter gezeigt.

Das Ausrückelement 1 weist einen Ringabschnitt 11 und einen Hülsenabschnitt 12 auf, wobei der Hülsenabschnitt 12 mit der Betätigungseinrichtung 10 in Wirkverbindung steil, um in axialer Richtung bewegt zu werden. Der Ringabschnitt 11 des Ausrückelements 1 weist einen Innendurchmesser auf, der sich in Richtung der Kupplung vergrößert, welches aus Fig.2 deutlich wird.

Der Ringabschnitt 11 dient zum Führen der als Kugeln 2, 2' ausgebildeten Wälzkörper, um das Ausrückelement 1 über die Kugeln 2, 2' axial bewegbar auf dem Ausrücklagerhalter 3 zu lagern. Die Kugeln 2, 2' sind über den Umfang des Ringabschnittes 11 des Ausrückelements 1 verteilt angeordnet und bilden somit einen Kugelkranz.

Der Ausrücklagerhalter 3 ist als Hülsenelement 13 mit einem angeformten Flanschkragen 14 ausgebildet. Der Flanschkragen 14 ist an dem kupplungsseitigen Ende des Hülsenelements 13 angeordnet. Die Kugeln 2, 2' sind somit zwischen dem Innenbereich des Ringabschnittes 11 und dem Außenmantel des Hülsenelements 13 des Ausrücklagerhalters 3 gelagert, um einen axialen Toleranzbereich zwischen dem Ausrückelement 1 und dem Ausrücklagerhalter zu realisieren.

Zum Vorspannen des Ausrücklagerhalters 3 bzw. des Ausrücklagers ist eine erste Feder 7 zwischen dem Ringabschnitt 11 des Ausrückelements 1 und dem Flanschkragen 14 des Ausrücklagerhalters 3 angeordnet. Der Flanschkragen 14 und der Ringabschnitt 11 weisen dazu an ihren einander zugewandten Seiten jeweils eine erste ringförmige Ausnehmung 15, 15' auf, in der jeweils ein Ende der ersten Feder 7 aufgenommen ist.

Zum optimalen Führen der Kugeln 2, 2' sind jeweils vor und hinter den Kugeln 2, 2' in axialer Richtung ein erster Ring 5 und ein zweiter Ring 6 vorgesehen. Durch eine zweite Feder 8 wird über den ersten Ring 5 eine gleichmäßige Anlage der Kugeln 2, 2' an dem zweiten Ring 6 gewährleistet. Die zweite Feder 8 ist in einer zweiten Ausnehmung 16 in dem Flanschkragen 14 aufgenommen. Die beiden Federn 7, 8 sind koaxial zueinander angeordnet.

Durch die von der Betätigungseinrichtung 10 erzeugte axiale Bewegung des inneren Ausrückelements 1 werden die Kugeln 2, 2' durch den sich verringernden Innendurchmesser entlang des Ringabschnittes 11 des Ausrückelements 1 nach dem Überwinden des axialen Toleranzbereiches auf den Außenmantel des Hülsenelements 13 des Ausrücklagerhalters 3 geklemmt, so dass eine Verspannung zwischen dem Ausrückelement 1 und dem Ausrücklagerhalter 3 erreicht wird. Auf diese Weise kann die Kupplung durch die auf das Ausrücklager übertragene axiale Bewegung geöffnet werden.

Beim Zurückfahren der erfindungsgemäßen Ausrückanordnung wird beim Erreichen der Endlage des Ausrückelements 1 im Toleranzbereich, wie in den Figuren gezeigt, durch den als Anschlagelement ausgebildeten Stift 4 die Verspannung zwischen dem Ausrückelement 1 und dem Ausrücklagerhalter 3 gelöst. Der Stift 4 ist gehäuseseitig an der Betätigungseinrichtung 10 befestigt. Durch den gehäusefesten Stift 4 wird über den zweiten Ring 6 eine Kraft auf die Kugeln 2, 2' ausgeübt, so dass diese in Richtung des sich vergrößernden Innendurchmessers des Ringabschnittes 11 des Ausrückelements 1 bewegt werden. Auf diese Weise kann die Verspannung zwischen dem Ausrückelement 1 und dem Ausrücklagerhalter 3 aufgrund des radialen Freiraumes gelöst werden, so dass der Ausrücklagerhalter 3 axial frei beweglich ist. Infolgedessen können Toleranzen der Bauteile und der Verschleißweg der Kupplung ausgeglichen werden.

### Bezugszeichen

- 1: Ausrückelement
- 2, 2': Kugel
- 3: Ausrücklagerhalter
- 4: Stift
- 5: erster Ring
- 6: zweiter Ring
- 7: erste Feder
- 8: zweite Feder
- 9: Getriebeeingangswelle
- 10: Betätigungseinrichtung
- 11: Ringabschnitt
- 12: Hülsenabschnitt
- 13: Hülsenelement
- 14: Flanschkragen
- 15, 15': erste ringförmige Ausnehmung
- 16: zweite ringförmige Ausnehmung

## Patentansprüche

1. Ausrückanordnung zum Betätigen zumindest einer Kupplung eines Fahrzeuggetriebes, mit einem inneren Ausrückelement (1) und mit einem Ausrücklagerhalter (3), welche koaxial zu einer Getriebeeingangswelle (9) angeordnet sind, wobei das Ausrückelement (1) über eine Betätigungseinrichtung (10) axial bewegbar ist, und wobei der Ausrücktagerhalter (3) zum Betätigen der Kupplung mit einem Ausrücklager verbunden ist, wobei zwischen dem Ausrückelement (1) und dem Ausrücklagerhalter (3) ein axialer Toleranzbereich zum Verschleiß- und/oder Toleranzausgleich vorgesehen ist, wobei das Ausrückelement (1) über mehrere Wälzkörper auf dem Ausrücklagerhalter (3) axial bewegbar gelagert ist, das Ausrückelement (1) einen Ringabschnitt (11) zum Führen der Wälzkörper und einen Hülsenabschnitt (12) aufweist und der Ausrücklagerhalter (3) als Hülsenelement (13) ausgebildet ist, an dessen Kupplungsseitigem Ende ein Flanschkragen angeformt ist **dadurch gekennzeichnet, dass** zwischen dem Flanschkragen (14) des Ausrücklagerhalters (3) und einem Ringabschnitt (11) des Ausrückelements (1) eine erste Feder (7) zum Vorspannen des an dem Ausrücklagerhalter (3) angeordneten Ausrücklagers und zwischen dem Flanschkragen (14) und den Wälzkörpern eine zweite Feder (8) zum Vorspannen der Wälzkörper angeordnet ist, wobei die beiden Federn (8, 9) koaxial zueinander angeordnet sind.

2. Ausrückanordnung nach Anspruch 1, **dadurch gekennzeichnet, dass** das Ausrückelement (1) nach dem Überwinden des axialen Toleranzbereiches mit dem Ausrücklagerhalter (3) zum Betätigen der Kupplung verspannt ist, und dass der Ausrücklagerhalter (3) nach der Betätigung der Kupplung im axialen Toleranzbereich von dem Ausrückelen ent (1) gelöst ist.

3. Ausrückanordnung nach einem der vorangehenden Ansprüche, **dadurch gekennzeichnet,** jedem Wälzkörper ein Anschlagelement zum Erreichen des Toleranzbereiches zugeordnet ist.

4. Ausrückanordnung nach Anspruch 3, **dadurch gekennzeichnet, dass** das Anschlagelement als gehäusefester Stift (4) ausgebildet ist, der die axiale Bewegung des zugeordneten Wälzkörpers in die der Kupplung abgewandte Richtung begrenzt.

5. Ausrückanordnung nach Anspruch 3 oder 4, **dadurch gekennzeichnet, dass** als Wälzlager mehrere über den Umfang des Ausrückelements (1) verteilt angeordnete Kugeln (2, 2') vorgesehen sind.

6. Ausrückanordnung nach Anspruch 1, **dadurch gekennzeichnet, dass** der Hülsenabschnitt (12) mit der Betätigungseimichtung (10) in Wirkverbindung steht.

7. Ausrückanordnung nach Anspruch 1 oder 6, **dadurch gekennzeichnet, dass** sich der Innendurchmesser des Ringabschnittes (11) In axialer Richtung verändert.

8. Ausrückanordnung nach Anspruch 7, **dadurch gekennzeichnet, dass** sich der Innendurchmesser in Richtung der Kupplung vergrößert.

9. Ausrückanordnung nach einem der vorangehenden Ansprüche, **dadurch gekennzeichnet, dass** der Flanschkragen (14) und der Ringabschnitt (11) an den einander zugewandten Seiten jeweils ringförmige Ausnehmungen (15, 15') zum Aufnehmen der ersten Feder (7) aufweist.

10. Ausrückanordnung nach einem der vorangehenden Ansprüche, **dadurch gekennzeichnet, dass** in axialer Richtung vor und hinter den Wälzkörpern jeweils ein Ring (5, 6) zur Führung der Wälzkörper angeordnet ist.

## Claims

1. Disengagement arrangement for actuating at least one clutch of a vehicle transmission, having an inner disengagement element (1) and having a disengagement bearing holder (3) which are arranged coaxially with respect to a transmission input shaft (9), with it being possible for the disengagement element (1) to be moved axially by means of an actuating device (10), and with the disengagement bearing holder (3) being connected, for the actuation of the clutch, to a disengagement bearing, with an axial tolerance range for wear and/or tolerance compensation being provided between the disengagement element (1) and the disengagement bearing holder (3), with the disengagement element (1) being mounted in an axially movable manner on the disengagement bearing holder (3) by means of a plurality of rolling bodies, with the disengagement element (1) having an annular section (11) for guiding the rolling bodies and having a sleeve section (12), and with the disengagement bearing holder (3) being designed as a sleeve element (13), on the clutch-side end of which is integrally formed a flange collar (14), **characterized in that** a first spring (7) for preloading the disengagement bearing arranged on the disengagement bearing holder (3) is arranged between the flange collar (14) of the disengagement bearing holder (3) and an annular section (11) of the disengagement element (1), and a second spring (8) for preloading the rolling bodies is arranged between the flange collar (14) and the rolling bodies, with the two springs (8, 9) being arranged coaxially with respect to one another.

2. Disengagement arrangement according to Claim 1, **characterized in that** the disengagement element (1), after overcoming the axial tolerance range, is braced against the disengagement bearing holder (3) in order to actuate the clutch, and **in that**, after the actuation of the clutch, the disengagement bearing holder (3) is released from the disengagement element (1) in the axial tolerance range.

3. Disengagement arrangement according to one of the preceding claims, **characterized in that** each rolling body is assigned a stop element for obtaining the tolerance range.

4. Disengagement arrangement according to Claim 3, **characterized in that** the stop element is designed as a pin (4) which is fixed with respect to a housing and which limits the axial movement of the associated rolling body in the direction facing away from the clutch.

5. Disengagement arrangement according to Claim 3 or 4, **characterized in that** a plurality of balls (2, 2') arranged distributed over the circumference of the disengagement element (1) are provided as a rolling bearing.

6. Disengagement arrangement according to Claim 1, **characterized in that** the sleeve section (12) is operatively connected to the actuating device (10).

7. Disengagement arrangement according to Claim 1 or 6, **characterized in that** the inner diameter of the annular section (11) varies in the axial direction.

8. Disengagement arrangement according to Claim 7, **characterized in that** the inner diameter increases in the direction of the clutch.

9. Disengagement arrangement according to one of the preceding claims, **characterized in that** the flange collar (14) and the annular section (11), on the sides facing toward one another, in each case have annular recesses (15, 15') for receiving the first spring (7).

10. Disengagement arrangement according to one of the preceding claims, **characterized in that** in each case one ring (5, 6) for guiding the rolling bodies is arranged in front of and behind the rolling bodies in the axial direction.

## Revendications

1. Système de débrayage pour l'actionnement d'au moins un embrayage d'une transmission de véhicule, comprenant un élément de débrayage interne (1) et un support de palier de débrayage (3), qui sont disposés coaxialement à un arbre d'entrée de transmission (9), l'élément de débrayage (1) pouvant être déplacé axialement par le biais d'un dispositif d'actionnement (10), et le support de palier de débrayage (3) étant connecté à un palier de débrayage pour l'actionnement de l'embrayage, une plage de tolérance pour la compensation de l'usure et/ou des tolérances étant prévue entre l'élément de débrayage (1) et le support de palier de débrayage (3), l'élément de débrayage (1) étant supporté de manière déplaçable axialement par le biais de plusieurs corps de roulement sur le support de palier de débrayage (3), l'élément de débrayage (1) présentant une portion annulaire (11) pour le guidage des corps de roulement et une portion de douille (12), et le support de palier de débrayage (3) étant réalisé sous forme d'élément de douille (13) sur l'extrémité côté embrayage duquel est façonné un collet de bride (14), **caractérisé en ce qu'**entre le collet de bride (14) du support de palier de débrayage (3) et une portion annulaire (11) de l'élément de débrayage (1) est disposé un premier ressort (7) pour la précontrainte du palier de débrayage disposé sur le support de palier de débrayage (3) et entre le collet de bride (14) et les corps de roulement est disposé un deuxième ressort (8) pour la précontrainte des corps de roulement, les deux ressorts (7, 8) étant disposés coaxialement l'un à l'autre.

2. Système de débrayage selon la revendication 1, **caractérisé en ce que** l'élément de débrayage (1), après avoir passé la plage de tolérance axiale, est précontraint avec le support de palier de débrayage (3) pour actionner l'embrayage, et **en ce que** le support de palier de débrayage (3), après l'actionnement de l'embrayage dans la plage de tolérance axiale, est libéré de l'élément de débrayage (1).

3. Système de débrayage selon l'une quelconque des revendications précédentes, **caractérisé en ce que** l'on associe à chaque corps de roulement un élément de butée pour atteindre la plage de tolérance.

4. Système de débrayage selon la revendication 3, **caractérisé en ce que** l'élément de butée est réalisé sous forme de goupille (4) fixée au boîtier, qui limite le déplacement axial du corps de roulement associé dans la direction opposée à l'embrayage.

5. Système de débrayage selon la revendication 3 ou 4, **caractérisé en ce que** l'on prévoit comme palier à roulement plusieurs billes (2, 2') réparties sur la périphérie de l'élément de débrayage (1).

6. Système de débrayage selon la revendication 1, **caractérisé en ce que** la portion de douille (12) est en liaison fonctionnelle avec le dispositif d'actionnement (10).

7. Système de débrayage selon la revendication 1 ou 6, **caractérisé en ce que** le diamètre intérieur de la portion annulaire (11) varie dans la direction axiale.

8. Système de débrayage selon la revendication 7, **caractérisé en ce que** le diamètre interne augmente dans la direction de l'embrayage.

9. Système de débrayage selon l'une quelconque des revendications précédentes, **caractérisé en ce que** le collet de bride (14) et la portion annulaire (11) présentent, sur les côtés tournés l'un vers l'autre, à chaque fois des évidements de forme annulaire (15, 15') pour recevoir le premier ressort (7).

10. Système de débrayage selon l'une quelconque des revendications précédentes, **caractérisé en ce qu'**une bague (5, 6) pour le guidage des corps de roulement est disposée à chaque fois dans la direction axiale avant et après les corps de roulement.
